Europäisches Patentamt

(19) European Patent Office

Office européen des brevets

(11) Publication number: **0 188 063**

A1

(12) **EUROPEAN PATENT APPLICATION**

(21) Application number: 85307823.6

(22) Date of filing: 29.10.85

(51) Int. Cl.⁴: **C 23 F 11/00**
**C 01 B 17/69, B 01 D 53/34**

(30) Priority: 03.12.84 US 677157
03.12.84 US 677152

(43) Date of publication of application:
23.07.86 Bulletin 86/30

(84) Designated Contracting States:
DE FR GB NL SE

(71) Applicant: W.R. GRACE & CO.
Grace Plaza 1114 Avenue of the Americas
New York New York 10036(US)

(72) Inventor: Salihar, Mark William
1318 S. Grove
Berwyn Illinois 60402(US)

(72) Inventor: Engstrom, Gary Gene
7402 Fifth Avenue
Kenosha Wisconsin 53140(US)

(72) Inventor: Gauwitz, Donald Paul
2504 S. Lilac
McHenry Illinois 60050(US)

(74) Representative: Ellis-Jones, Patrick George
Armine et al,
J.A. KEMP & CO. 14 South Square Gray's Inn
London WC1R 5EU(GB)

(54) Method of inhibiting cold end corrosion in boilers.

㊺ In one embodiment, a liquid borate is added to sulfur trioxide-containing combustion gases at a temperature of from about 250 to about 1000°F. in a boiler or other furnace system. The borate neutralizes sulfuric acid in the gases and inhibits sulfuric acid corrosion and deposition on metal surfaces of the system that contact the gases. An organic deposit modifying agent such as sorbitol and an additional acid neutralizing agent such as an alkali metal hydroxide, aluminate, or silicate may also be added to the combustion gases.

In another embodiment the additive comprises an aqueous solution of an alkali metal compound and an organic deposit modifying agent such as sorbitol at the same temperatures. The alkali metal compound neutralizes sulfuric acid in the gases and inhibits sulfuric acid corrosion and deposition on metal surfaces of the system that contact the gases. The organic deposit modifying agent generates a gas at the temperatures encountered in the furnace system and the solids formed on evaporation of the solution thus have a high surface area so that acid neutralization is enhanced and high friability so that deposits of the alkali metal compound on surfaces of the system are easily removed.

This invention relates to the neutralization of sulfuric acid in furnace combustion gases and inhibition of corrosion and fouling of metal surfaces that come in contact with the gases.

Combustion of sulfur-containing fuels such as coal and residual oil in boilers and other furnace systems generates sulfur trioxide-containing gases. Release of the sulfur trioxide to the atmosphere can cause air pollution. Sulfur trioxide also combines with water vapor in the combustion gases to form sulfuric acid and the sulfuric acid can deposit on metal surfaces in the system. These acid deposits cause corrosion and fouling that interfere with gas flow and reduce heat transfer efficiency.

In a typical electric power generating boiler system, the hot gases produced in the combustion chamber of the furnace flow over boiler tubes that are positioned in the radiant heating section of the furnace and contain the water to be converted to steam. The gases then flow in sequence from the combustion zone and steam generator zone through the steam heater, economizer, and air preheater zones. These additional heat recovery devices are positioned in the flue through which the gases pass after leaving the combustion chamber in order to maximize the utilization of combustion gas heat. The steam heater zone contains the superheaters and/or the reheaters. The superheaters heat steam generated in the boiler tubes and the superheated steam is fed to the turbine. In boiler systems with multiple stage turbines, the reheaters heat partially expanded steam withdrawn from the high pressure stages of the turbine and the reheated steam is used to drive the lower pressure stages of the turbine. After passing through the superheaters and/or reheaters, the combustion gases flow through the economizer where the feedwater to the boiler tubes is preheated. The air preheater is located downstream from the economizer in the flow path of the combustion gases and increases the temperature of the air feeding the combustion system and thus the overall efficiency of the boiler. The gases then flow through the precipitator where solids are removed and then up the stack.

The combustion gases cool to progressively lower temperatures as they flow through the heat recovery devices in the boiler system. The gas temperature is 2500 to 3500°F. in the flame section of the combustion chamber and 2000 to 2500°F. in the radiant heating section. The gas temperature is 1000 to 1600°F. after passage through the superheaters and/or reheaters and 500 to 750°F. after passage through the economizer. The gas temperature after the gases pass through the air preheater is 250 to 350°F. The cold end of a boiler system is the path that the combustion gases follow through the economizer, air preheater, precipitator, and stack after the gases have performed the functions of heating water, producing steam, and superheating and reheating steam in the boiler tubes, superheaters, and reheaters.

Sulfuric acid condenses onto metal surfaces at the cold end where the flue gas temperature falls below the condensation temperature or dew point of the acid vapor. The acid dew point depends upon the relative proportions of acid and water vapor that are present in the combustion gases and varies from 280 to 320°F. under normal operating conditions. The metal temperatures fall below the dew point of the acid vapors at or after the air preheater and the most noticeable sulfuric acid corrosion and fouling generally occur in the air preheater and subsequent stages.

Various neutralizing additives have been used in boiler flue gases. In British Patent 822,314, alkali metal compounds such as sodium or potassium hydroxide are injected after the combustion chamber of a boiler to reduce the acid content of the flue gases and prevent corrosion of metal surfaces such as economizers and air heaters. U.S. Patents 4,137,727 of Oschell et al. and 4,140,750 of Oschell describe cold end addition to boiler flue gases of sodium metasilicate and its combinations with other materials to reduce the sulfur trioxide content. In U.S. Patents 4,100,258 of Vossos et al., 4,134,729 of Libutti et al., and 4,298,497 of Columbo, sodium aluminate and its combinations with other materials are used as neutralizing agents to remove sulfur trioxide from flue gases in the cold end of a boiler.

U.S. Patent 3,306,235 of Lewis et al. describes the use of a solid borate as a furnace additive. According to Lewis et al., a dry mixture of sodium tetraborate and one or more conventional furnace additives such as alkaline earth metal oxides is introduced into a steam generating furnace to reduce tube corrosion and deposits. The presence of the sodium tetraborate increases the adherence of the additives to the heat transfer surfaces without impairing the beneficial effect of the additive itself. The mixture is introduced into the furnace at locations which will give adequate and relatively uniform coverage of the superheater and reheater tubes.

Alkali metal compounds are particularly effective in neutralizing sulfuric acid in furnace combustion gases because of their high alkalinity. However, their use in practice has been hampered by the adherent deposits they form on metal surfaces in the system. These deposits interfere with gas flow and heat transfer efficiency and can result in pluggage of heat transfer devices and ducts that interferes with furnace operation.

The present invention provides methods of reducing corrosion and fouling of metal surfaces in contact with sulfur trioxide-containing combustion gases in a furnace system. In one method, a liquid borate is added to the gases at a temperature of from about 250 to about 1,000°F. in an amount effective to reduce corrosion and fouling. The method surprisingly provides unexpectedly effective neutralization of the acidic combustion gases. The solids formed on evaporation of the liquid borate in the system have a high surface area so that acid neutralization is enhanced and high friability so that deposits on metal surfaces are easily removed.

In a second method, an aqueous solution comprising an alkali metal compound and an organic deposit modifying agent is added to the gases at a temperature of from about 250 to about 1,000°F. in an amount effective to reduce corrosion and fouling. The organic deposit modifying agent has a gas generation temperature of from about 250 to about 1,000°F.

The liquid borate used in the present invention is generally an aqueous solution of a water soluble borate. Suitable water soluble borates include various borates such as alkali metal and ammonium metaborates and tetraborates. Sodium tetraborate in the commercially available decahydrate form is preferred because its evaporated solids generally have a higher surface area and friability.

One or more conventional cold end liquid neutralizing agents such as an aqueous solution of a water soluble sodium or other alkali metal hydroxide, aluminate, or silicate may be used in combination with the borate in order to increase the acid neutralization capacity. An alkali metal hydroxide such as sodium hydroxide is particularly preferred because of its high alkalinity and its combination with the borate provides superior neutralization without the adherent sodium hydroxide deposits that may occur when sodium hydroxide is used without borate.

In order to increase further the acid neutralization capacity of the borate and the friability of the deposits, a liquid organic deposit modifying agent may also be added to the combustion gases. These deposit modifying agents result in solids that have more surface area for acid neutralization and that are more friable and less adherent to the metal surfaces in the furnace system. The resulting deposits are more easily removed by the application of compressed air which is conventionally employed to clean metal surfaces in furnace systems. Suitable organic deposit modifying agents have a gas generation temperature, i.e., a temperature at which they evaporate and/or decompose to produce a gas, of generally about 250 to about 1000°F. and preferably of about 350 to about 650°F. so that they generate a gas at the temperatures they encounter in the furnace system. The gas generation results in more rapid and complete drying and a solid material of higher surface area and friability. Suitable organic materials include aqueous solutions of water soluble alcohols, for example, water soluble aliphatic alcohols having 1 to 10 carbon atoms such as sorbitol, methanol, ethanol, ethylene glycol, proplyene glycol, and glycerol; water
soluble sugars such as fructose or glucose; and urea.
Sorbitol is preferred.

The liquid cold end additive in the form of an
aqueous solution generally comprises from about 1 to
about 30 weight percent and preferably from about 5 to
about 25 weight percent of the borate, generally from
about 1 to about 50 weight percent and preferably from
about 5 to about 35 weight percent of the additional
neutralizing agent, generally from about 1 to about 10
weight percent and preferably from about 1 to about 5
weight percent of the organic deposit modifying agent,
and the balance water as the solvent. Mixtures of
these components may be prepared by blending solid
materials and dissolving the mixture but blending
solutions is generally more convenient.

The second method also surprisingly provides
unexpectedly effective neutralization of the acidic
combustion gases. The solids of the alkali metal
compound formed on evaporation of the aqueous solution
in the system have a high surface area so that acid
neutralization is enhanced and high friability so that
deposits on metal surfaces are easily removed.

The water soluble alkali metal compound used in
the present invention may be, for example, sodium
hydroxide, sodium carbonate, potassium hydroxide,
potassium carbonate, or mixtures thereof. Sodium
hydroxide is preferred because of its high alkalinity,
low cost, and effective neutralization without deposition problems.

In practicing the second method a water soluble organic deposit modifying agent is also added to the combustion gases to generate a gas at the temperatures the agents encounter in the furnace system. The deposit modifying agent results in more rapid and complete drying and alkali metal compound solids that have more surface area for acid neutralization and that are more friable and less adherent to the metal surfaces in the furnace system. The resulting deposits are more easily removed by the application of compressed air which is conventionally employed to clean metal surfaces in furnace systems. Suitable organic deposit modifying agents have been described above.

The aqueous solution used in the second method generally comprises from about 1 to about 50 weight percent and preferably from about 5 to about 35 weight percent of the alkali metal compound, generally from about 0.5 to about 40 weight percent and preferably from about 0.75 to about 30 weight percent of the organic deposit modifying agent, and the balance water. As in the first method, mixtures of these components may be prepared by blending solid materials and dissolving the mixture but blending solutions is generally more convenient.

In practicing either of the methods the liquid additive may be introduced into the furnace in a variety of ways that provide effective contact of the additive with the acid gases. Generally, the additive
is sprayed into the combustion gases upstream of the
metal surfaces to be treated or directly into the gases
as they contact the surfaces. The additive may be
introduced by the use of a sonic feed nozzle or other
liquid atomizer nozzle. At the point of addition, the
temperature of the combustion gases is from about 250
to about 1000°F. and is preferably from about 350 to
about 650°F. Although addition may be made downstream
of the superheaters and reheaters and upstream of the
economizer, the addition is typically made upstream of
the air preheater and downstream of the economizer
because the more severe corrosion and fouling problems
occur in the air preheater and subsequent stages.

The amount of the borate or of the borate and
additional neutralizing agent and/or organic deposit
modifying agent additive; as well as the amount of
alkali metal compound and organic deposit modifying
agent additive used in the second method; which is
effective to reduce corrosion and fouling may vary
widely since corrosion and fouling depend upon the
nature of the fuel, the way in which it is burned, and
the size of the furnace. Generally, the additive
amount may range from about 0.05 to about 1.5 pounds of
additive (dry basis) per pound of sulfur trioxide
present in the combustion gases.

### EXAMPLE 1

A aqueous solution containing 20 weight percent
sodium tetraborate and 5 weight percent sodium hydroxide was prepared and tested as an air preheater corrosion and fouling inhibitor in an industrial boiler. The boiler burned a pulverized five weight percent sulfur eastern coal and produced five hundred thousand pounds of steam per hour nominal design capacity. The tetraborate and hydroxide solution was injected at a point in the duct twenty five feet prior to the air preheater where the flue gas stream temperature was in the range of 550 to 750°F. The additive was tested at five dosage rates ranging from 0.5 to 4.0 pounds per ton of coal burned. The acid dew points of the flue gases were measured without treatment and at the five dosage rates. Acid dew point decreases when the sulfuric acid content of the gases decreases. The ppm amounts of sulfur trioxide that are equivalent to the measured dew points were determined for eight percent flue gas moisture from the Abel and Greenewalt curve. The results are shown in the following table.

| Rate (pound/ton) | Acid Dew Point (°F.) | $SO_3$ (ppm) |
|---|---|---|
| 0 | 278-290 | 18-40 |
| 0.5 | 275-285 | 14-28 |
| 1.0 | 272-276 | 12-16 |
| 1.5 | 268-273 | 8-13 |
| 2.5 | 265-268 | 6-8 |
| 4.0 | 255-264 | 3-6 |

The additive of the present invention reduced the acid dew point by 12°F. from the untreated dewpoint at a 1.5 pound per ton dosage level and by 18°F. at a 2.5 pound per ton dosage level. The 12°F. and 18°F. reductions respectively correspond to sulfur trioxide concentration reductions of 8 and 6 ppm.

The effectiveness of the additive was also evaluated by collecting samples of fly ash deposits from the air preheater tubes and measuring the pH of one weight percent slurries of the fly ash in distilled water. The fly ash slurry pH indicates the amount of sulfuric acid deposits on the tubes. A one percent slurry of ash treated with the additive had a pH of 3.00 which is equivalent to 0.0010 gram-ions per liter. A one percent slurry of untreated ash had a pH of 2.18 which is equivalent to 0.0066 gram-ions per liter. Thus, treatment at 1.5 pounds per ton resulted in a six times lower free hydrogen ion concentration in the fly ash particulate.

The results demonstrate the unique ability of the borate solution to neutralize sulfuric acid in furnace combustion gases.

### EXAMPLES 2

A aqueous solution containing 30 weight percent sodium hydroxide and 1 weight percent sorbitol was prepared and tested as an air preheater corrosion and fouling inhibitor in an industrial boiler. The boiler burned a pulverized five weight percent sulfur eastern coal and produced five hundred thousand pounds of steam per hour nominal design capacity. The hydroxide and
sorbitol solution was injected at a point in the duct
twenty five feet prior to the air preheater where the
flue gas stream temperature was in the range of 550 to
750°F. The additive was tested at five dosage rates
ranging from 0.5 to 4.0 pounds per ton of coal burned.
The acid dew points of the flue gases were measured
without treatment and at the five dosage rates. Acid
dew point decreases when the sulfuric acid content of
the gases decreases. The ppm amounts of sulfur
trioxide that are equivalent to the measured dew points
were determined for eight percent flue gas moisture
from the Abel and Greenewalt curve. The results are
shown in the following table.

| Rate (pound/ton) | Acid Dew Point (°F.) | $SO_3$ (ppm) |
|---|---|---|
| 0 | 278-290 | 18-40 |
| 1.0 | 262-270 | 6-10 |
| 1.5 | 258-268 | 4-8 |
| 2.5 | 252-262 | 3-6 |
| 4.0 | 250-258 | 2-4 |

The additive of the present invention reduced the acid
dew point by 21°F. from the untreated dewpoint at a 1.5
pounds per ton dosage level and by 26°F. at a 2.5
pounds per ton dosage level. The 12°F. and 18°F.
reductions respectively correspond to sulfur trioxide
concentrations of 4 and 3 ppm compared to a baseline sulfur trioxide concentration of 18 ppm..

The effectiveness of the additive was also evaluated by collecting samples of fly ash deposits from the air preheater tubes and measuring the pH of one weight percent slurries of the fly ash in distilled water. The fly ash slurry pH indicates the amount of sulfuric acid deposits on the tubes. A one percent slurry of ash treated with the additive had a pH of 3.48 which is equivalent to 0.00033 gram-ions per liter. A one percent slurry of untreated ash had a pH of 2.18 which is equivalent to 0.0066 gram-ions per liter. Thus, treatment at 1.5 pounds per ton resulted in a twenty times lower free hydrogen ion concentration in the fly ash particulate.

The industrial boiler had commonly experienced air preheater pluggage problems in the past. Boiler parameters were also monitored during the trial for indications of air preheater pluggage and product deposition. The brevity of the trial was such that a significant change in air preheater differential pressure was not realized. The short term results did, however, indicate that the air preheaters remained in clean condition.

The results demonstrate the unique ability of the additive of this invention to neutralize sulfuric acid in furnace combustion gases.

CLAIMS

1.      A method of reducing corrosion and fouling of a metal surface in contact with a sulfur trioxide-containing combustion gas in a furnace system which comprises adding at least either (i) a liquid composition comprising a borate or (ii) an aqueous solution of an alkali metal compound and an organic deposit modifying agent to the gas at a temperature of 250 to 1000°F. (120 to 540°C) in an amount from 0.05 to 1.5 parts of borate per part of sulfur trioxide, by weight.

2.      A method according to Claim 1 in which the borate composition or said aqueous solution is added at a temperature of 350 to 750°F (175 to 400°C).

3.      A method according to Claim 1 or 2 in which an additional acid neutralising agent and/or a liquid organic deposit modifying agent having a gas generation temperature of 250°F to 1000°F is added with the borate.

4.      A method according to Claim 1 or 3 in which the additional neutralising agent is an aqueous solution of sodium hydroxide and the deposit modifying agent is an aqueous solution of an alcohol, sugar or urea.

5.      A method according to Claim 1 or 4 in which the deposit modifying agent is an aqueous solution of sorbitol.

6.      A method according to any one of Claims 1 to 5 in which an aqueous solution comprising from 1 to 30 weight percent of the borate, from 1 to 10 weight percent of the organic deposit modifying agent, and from 1 to 50 weight percent of an additional acid neutralizing agent is added to the gases.

7.       A method according to any one of the preceding claims in which the borate composition is an aqueous solution of sodium tetraborate.

8.       A method according to any one of the preceding claims in which the furnace system is a boiler system having a steam heater, an economizer, and an air preheater through which the gas flows in sequence and the borate composition or said aqueous solution is added to the gas downstream of the economizer and upstream of the air preheater.

9.       A method according to Claim 8 in which an additive comprising from 5 to 25 weight percent sodium tetraborate, from 5 to 35 weight percent sodium hydroxide, from 1 to 5 weight percent sorbitol, and the balance water is sprayed into the gas downstream of the economizer and upstream of the air preheater.

10.       A method according to any one of Claims 1, 2, 4, 5, 8 and 9 in which the alkali metal compound is sodium hydroxide.

11.       A method according to any one of Claims 1, 2, 4, 5 and 8 to 10 in which the aqueous solution comprises from 1 to 50 weight percent of the alkali metal compound and from 0.5 to 40 weight percent of the organic deposit modifying agent.

12.       A method according to Claim 8 in which an additive comprising from 5 to 35 weight percent sodium hydroxide, from 0.75 to 30 weight percent sorbitol, and the balance water is sprayed into the gas downstream of the economizer and upstream of the air heater.

**European Patent Office**

**EUROPEAN SEARCH REPORT**

Application number

| Category | Citation of document with indication, where appropriate, of relevant passages | Relevant to claim | CLASSIFICATION OF THE APPLICATION (Int. Cl.4) |
|---|---|---|---|
| A | US - A - 4 385 039 (P.S.LOWELL et al.) <br> * Tables; claims * | 1 | C 23 F 11/00 <br> C 01 B 17/69 <br> B 01 D 53/34 |
| A | US - A - 4 377 557 (P.S.LOWELL) <br> * Column 1, line 34 - column 2, line 27; tables; claims * | 1,10 | |
| D,A | US - A - 3 306 235 (E.C. LEWIS et al.) <br> * Claims 1,2 * | 1 | |
| A | US - A - 3 886 261 (B.L.LIBUTTI) <br> * Column 1, lines 37-49; claims* | 1,8 | |

## DOCUMENTS CONSIDERED TO BE RELEVANT

EP 85307823.6

TECHNICAL FIELDS SEARCHED (Int. Cl 4)

C 23 F
C 01 B
B 01 D

The present search report has been drawn up for all claims

| Place of search | Date of completion of the search | Examiner |
|---|---|---|
| VIENNA | 20-02-1986 | SLAMA |